# EUROPEAN PATENT APPLICATION

(11) **EP 4 477 414 A1**
(43) Date of publication of application: **18.12.2024**
(21) Application number: 23752742.9
(22) Date of filing: 31.01.2023
(51) Int. Cl.: B32B 27/10, B32B 27/36, B65D 65/40

(54) **BIODEGRADABLE LAMINATED BODY, METHOD FOR PRODUCING SAME, AND MOLDED BODY**

(30) Priority: 08.02.2022 JP 2022017732
(71) Applicant: Kaneka Corporation, Osaka-shi, Osaka 530-8288 (JP)
(72) Inventor: MURASHIMA, Kensuke, Settsu-shi,Osaka 566-0072 (JP); OKADA, Yasunori, Settsu-shi,Osaka 566-0072 (JP)
(74) Representative: Vossius & Partner Patentanwälte Rechtsanwälte mbB
(86) International application number: PCT/JP2023/003112
(87) International publication number: WO 2023/153277

(57) **Abstract**

A biodegradable laminate includes in order: a layer of a paper substrate (A); a layer of a first thermoplastic resin (B) containing a poly(3-hydroxyalkanoate) resin as a main component; and a layer of a second thermoplastic resin (C) containing a poly(3-hydroxyalkanoate) resin as a main component. The poly(3-hydroxyalkanoate) resin in the first thermoplastic resin (B) has a weight-average molecular weight of 10 × 10⁴ to less than 35 × 10⁴, and the poly(3-hydroxyalkanoate) resin in the second thermoplastic resin (C) has a weight-average molecular weight of 45 × 10⁴ to less than 70 × 10⁴.

## Description

### Technical Field

The present invention relates to: a biodegradable laminate including a paper substrate layer and a thermoplastic resin layer containing a poly(3-hydroxyalkanoate) resin; a method for producing the biodegradable laminate; and a molded article.

### Background Art

In recent years, environmental problems due to waste plastics have become an issue of great concern. In particular, waste plastics have caused serious marine pollution, and there is a demand for widespread use of biodegradable plastics which are degradable in the natural environment.

Various kinds of such biodegradable plastics are known. Poly(3-hydroxyalkanoate) resins (hereinafter also referred to as "P3HA resins") are thermoplastic polyesters produced and accumulated as energy storage substances in the cells of many kinds of microorganisms, and these resins are biodegradable in seawater as well as in soil and thus are drawing attention as materials that can be a solution to the above-mentioned problems. In particular, a composite having a P3HA resin combined with a paper substrate is attracting an especially high level of social interest because the composite can be used, for example, in an environmentally friendly food contact container.

Examples of techniques for combining a P3HA resin with a paper substrate include an extrusion lamination method and a coating method using an aqueous slurry. The extrusion lamination method has been preferred since the coating method has difficulty achieving sufficient mechanical strength of the resin layer.

However, even with the use of the extrusion lamination method, a P3HA resin with high mechanical strength generally has a high molecular weight and accordingly tends to have a high melt viscosity. A P3HA resin having a high melt viscosity has a very low ability to penetrate into paper; thus, such a P3HA resin is not easy to bond to paper strongly enough by lamination. Consequently, the resin layer peels from the paper during a production process of a cup-shaped molded article such as a drinking cup, and filling the cup-shaped molded article with a substance results in leakage of the substance from the cup-shaped molded article.

Patent Literature 1 is directed to enhancing the lamination strength between a paper substrate and a biodegradable resin layer and discloses a laminate production method in which a dispersion or an emulsion containing 50 wt% or more of polycaprolactone is applied onto a paper substrate at a weight per unit area (dry weight of layer) of 10 g/m², the applied layer of the dispersion or emulsion is dried, and then a layer of a biodegradable resin composed mainly of 3-hydroxybutyric acid-3-hydroxyvaleric acid copolymer which is a P3HA resin is formed on the dried layer by extrusion lamination to produce a laminate.

### Citation List

### Patent Literature

PTL 1: Japanese Laid-Open Patent Application Publication No. H6-293113

### Summary of Invention

### Technical Problem

The laminate as described in Patent Literature 1 tends to exhibit enhanced lamination strength between the paper substrate and the biodegradable resin layer. However, the resin layer of this laminate has low mechanical strength and could crack during bending. The heat sealability of the laminate is also low and insufficient for a process such as cup molding.

In addition, polycaprolactone, which has a very low melting point of 60°C, is used as an essential component. Thus, for example, when a cup-shaped molded article made with the laminate is filled with a hot drink, the cup-shaped molded article suffers from reduced lamination strength, which could lead to peeling of the lamination layer.

In view of the above circumstances, the present invention aims to provide: a biodegradable laminate including a paper substrate layer and a thermoplastic resin layer containing a poly(3-hydroxyalkanoate) resin, the biodegradable laminate having satisfactory lamination strength, sufficient mechanical strength, and heat sealability which is high enough for a process such as cup molding; and a method for producing the biodegradable laminate.

### Solution to Problem

The present invention relates to a biodegradable laminate including in order:
a layer of a paper substrate (A);
a layer of a first thermoplastic resin (B) containing a poly(3-hydroxyalkanoate) resin as a main component; and
a layer of a second thermoplastic resin (C) containing a poly(3-hydroxyalkanoate) resin as a main component, wherein
the poly(3-hydroxyalkanoate) resin in the first thermoplastic resin (B) has a weight-average molecular weight of 10 × 10⁴ to less than 35 × 10⁴, and
the poly(3-hydroxyalkanoate) resin in the second thermoplastic resin (C) has a weight-average molecular weight of 45 × 10⁴ to less than 70 × 10⁴.

### Advantageous Effects of Invention

The present invention can provide: a biodegradable laminate including a paper substrate layer and a thermoplastic resin layer containing a poly(3-hydroxyalkanoate) resin, the biodegradable laminate having sufficient adhesive strength between the paper substrate layer and the thermoplastic resin layer, having mechanical strength high enough for bending, and having heat sealability high enough for a process such as cup molding; and a method for producing the biodegradable laminate.

In the present invention, the thermoplastic resin layer is made up of two layers each of which contains a poly(3-hydroxyalkanoate) resin having a relatively high melting point as a main component. Thus, for example, the biodegradable laminate has the advantage of being resistant to a reduction in lamination strength even when exposed to high temperature such as when a cup-shaped molded article made with the biodegradable laminate is filled with a hot drink.

The use of the biodegradable laminate of the present invention can improve the production efficiency and quality of a molded article.

### Brief Description of Drawings

FIG. 1 is a schematic cross-sectional view of a biodegradable laminate according to a first aspect of the present invention.
FIG. 2 is a schematic cross-sectional view of a biodegradable laminate according to a second aspect of the present invention.

### Description of Embodiments

Hereinafter, embodiments of the present invention will be described. The present invention is not limited to the embodiments described below.

### [Biodegradable Laminate]

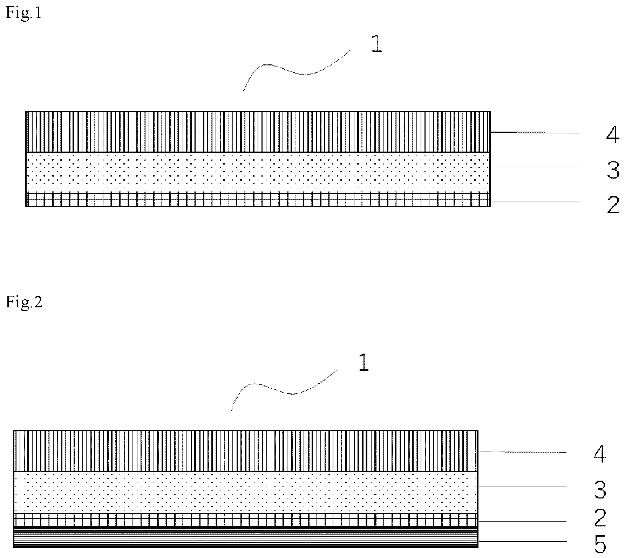

A biodegradable laminate according to a first aspect of the present invention includes, in order, a layer of a paper substrate (A), a layer of a first thermoplastic resin (B) containing a poly(3-hydroxyalkanoate) resin as a main component, and a layer of a second thermoplastic resin (C) containing a poly(3-hydroxyalkanoate) resin as a main component. The layer arrangement in this aspect is shown in FIG. 1. In FIG. 1, the reference sign 1 denotes the biodegradable laminate, the reference sign 2 denotes the layer of the paper substrate (A), the reference sign 3 denotes the layer of the first thermoplastic resin (B), and the reference sign 4 denotes the layer of the second thermoplastic resin (C).

In terms of improving heat sealability in cup molding, a biodegradable laminate according to a second aspect of the present invention may include a layer of an adhesive resin (D) on that side of the layer of the paper substrate (A) which is opposite to the side having the layers of the first and second thermoplastic resins (B) and (C). The layer arrangement in this aspect is shown in FIG. 2. In FIG. 2, the reference signs 1 to 4 are the same as those in FIG. 1, and the reference sign 5 denotes the layer of the adhesive resin (D).

In both the first and second aspects, the layer of the first thermoplastic resin (B) may be located directly on the layer of the paper substrate (A), or another resin layer may be located as an intermediate layer between the layer of the first thermoplastic resin (B) and the layer of the paper substrate (A) to the extent that the other resin layer does not diminish the interlayer adhesion. To impart water resistance or gloss to the laminate, yet another resin layer may be located on the layer of the second thermoplastic resin (C).

### [Layer of Paper Substrate (A)]

The layer of the paper substrate (A) is not limited to a particular type and may be any layer composed mainly of paper. Desirably, the layer of the paper substrate (A) is biodegradable. Examples of the paper substrate (A) include, in addition to paper (composed mainly of cellulose): paper substrates composed of cellulose and another material such as cellophane, cellulose ester, polyvinyl alcohol, polyamino acid, polyglycolic acid, or pullulan; and any of these paper substrates on which an inorganic substance such as aluminum or silica is vapor-deposited. The paper is not limited to a particular type, and examples of the paper include cup paper, kraft paper, high-quality paper, coated paper, tissue paper, glassine paper, and paperboard. The type of the paper can be selected as appropriate depending on the intended use of the biodegradable laminate.

Additives such as a waterproofing agent, a water repellent, and an inorganic substance may be added to the paper as necessary. The paper may be surface-treated to have an oxygen barrier coating or a water vapor barrier coating. The surface of the substrate layer may be subjected to a surface treatment such as corona treatment, ozone treatment, plasma treatment, flame treatment, or anchor coat treatment or may be treated to have an oxygen barrier coating or a water vapor barrier coating. One of such surface treatments may be performed alone, or two or more surface treatments may be used in combination.

### [Layer of First Thermoplastic Resin (B)]

The first thermoplastic resin (B) is not limited to a particular type and may be any biodegradable resin containing 50 wt% or more of a poly(3-hydroxyalkanoate) resin (hereinafter also referred to as "P3HA resin") and bondable to the layer of the paper substrate (A). The content of the P3HA resin in the first thermoplastic resin (B) is preferably 60 wt% or more, more preferably 70 wt% or more, even more preferably 80 wt% or more, and particularly preferably 90 wt% or more.

Since the first thermoplastic resin (B) contains a P3HA resin having a relatively high melting point as a main component, the biodegradable laminate has the advantage of being resistant to a reduction in lamination strength even when exposed to high temperature such as when a cup-shaped molded article made with the biodegradable laminate is filled with a hot drink.

The P3HA resin is a polyhydroxyalkanoate which is a biodegradable aliphatic polyester (preferably a polyester containing no aromatic ring) and which contains 3-hydroxyalkanoic acid repeating units represented by the formula [-CHR-CH₂-CO-O-] (wherein R is an alkyl group represented by CₙH₂ₙ₊₁ and n is an integer from 1 to 15). The P3HA preferably contains 50 mol% or more, more preferably 70 mol% or more, of the repeating units in total monomer repeating units (100 mol%).

Among P3HA resins, a poly(3-hydroxybutyrate) resin can be preferably used because, for example, this resin is easy to obtain and process.

The poly(3-hydroxybutyrate) resin (hereinafter also referred to as "P3HB" resin) is an aliphatic polyester resin that can be microbially produced and that contains 3-hydroxybutyrate as repeating units. The poly(3-hydroxybutyrate) resin may be poly(3-hydroxybutyrate) which contains only 3-hydroxybutyrate as repeating units or a copolymer of 3-hydroxybutyrate and another hydroxyalkanoate. The poly(3-hydroxybutyrate) resin may be a mixture of a homopolymer and one or more copolymers or a mixture of two or more copolymers.

Specific examples of the poly(3-hydroxybutyrate) resin include poly(3-hydroxybutyrate) (hereinafter also referred to as "PHB"), poly(3-hydroxybutyrate-co-3-hydroxyhexanoate) (hereinafter also referred to as "P3HB3HH"), poly(3-hydroxybutyrate-co-3-hydroxyvalerate), poly(3-hydroxybutyrate-co-4-hydroxybutyrate), poly(3-hydroxybutyrate-co-3-hydroxyoctanoate), poly(3-hydroxybutyrate-co-3-hydroxyoctadecanoate), poly(3-hydroxybutyrate-co-3-hydroxydecanoate), and poly(3-hydroxybutyrate-co-3-hydroxyvalerate-co-3-hydroxyhexanoate). Among these, poly(3-hydroxybutyrate), poly(3-hydroxybutyrate-co-3-hydroxyhexanoate), poly(3-hydroxybutyrate-co-3-hydroxyvalerate), and poly(3-hydroxybutyrate-co-4-hydroxybutyrate) are preferred since they are easy to industrially produce.

P3HB3HH is particularly preferred for the following reasons: the proportions of the repeating units can be varied to change the melting point and crystallinity and thus adjust the physical properties such as Young's modulus and heat resistance to levels intermediate between those of polypropylene and polyethylene; and this plastic is easy to industrially produce and useful in terms of physical properties. Poly(3-hydroxybutyrate) resins have the property of being thermally decomposed easily under heating at 180°C or higher and, in particular, P3HB3HH is preferred also in that it can have a low melting point and be moldable at low temperature.

The average content ratio between the constituent monomers (3HB/3HH) in P3HB3HH is preferably from 97 to 80/3 to 20 (mol%/mol%) and more preferably from 94 to 82/6 to 18 (mol%/mol%). When the average 3HH content in P3HB3HH is 3 mol% or more, satisfactory adhesion can be achieved in a heat sealing test described later. The crystallization rate of P3HB3HH having an average 3HH content of 20 mol% or less is not too low, and the production of such P3HB3HH is relatively easy. The average content ratio between the constituent monomers in P3HB3HH can be determined by a method known to those skilled in the art, such as a method described in paragraph of WO 2013/147139 or NMR analysis. The average content ratio refers to the molar ratio between 3HB and 3HH contained in P3HB3HH. When the P3HB3HH is a mixture containing at least two types of P3HB3HH or a mixture containing at least one type of P3HB3HH and PHB, the average content ratio refers to the molar ratio between the monomers contained in the total mixture.

As stated above, P3HB3HH having an average 3HH content of 3 to 20 mol% particularly preferably includes at least two types of P3HB3HH differing in the contents of the constituent monomers. It is also preferable for P3HB3HH having an average 3HH content of 3 to 20 mol% to include at least one type of P3HB3HH and PHB.

A specific method for producing P3HB3HH is described, for example, in WO 2010/013483.

Examples of commercially-available P3HB3HH include "Kaneka Biodegradable Polymer Green Planet^{™}" of Kaneka Corporation.

The first thermoplastic resin (B) may consist only of a P3HA resin or may further contain a biodegradable resin other than the P3HA resin. Examples of the other biodegradable resin include: aliphatic polyester resins such as polycaprolactone, polybutylene succinate adipate, polybutylene succinate, and polylactic acid; and aliphatic-aromatic polyester resins such as polybutylene adipate terephthalate and polybutylene azelate terephthalate.

In a preferred aspect, the first thermoplastic resin (B) may contain 50 wt% or more of P3HB3HH. The content of P3HB3HH in the first thermoplastic resin (B) is preferably 60 wt% or more, more preferably 70 wt% or more, even more preferably 80 wt% or more, and particularly preferably 90 wt% or more. In this aspect, the first thermoplastic resin (B) may consist only of P3HB3HH or may further contain a thermoplastic resin other than P3HB3HH. The other thermoplastic resin may be a P3HA resin other than P3HB3HH and/or a biodegradable resin other than P3HA resins as described above.

The weight-average molecular weight (hereinafter also referred to as "Mw") of a P3HA resin in the first thermoplastic resin (B) is preferably from 10 × 10⁴ to less than 35 × 10⁴, more preferably from 15 × 10⁴ to less than 30 × 10⁴, and even more preferably from 20 × 10⁴ to less than 25 × 10⁴ in terms of enhancing the adhesion or lamination strength to the layer of the paper substrate (A). The weight-average molecular weight may be at least 25 × 10⁴ or at least 30 × 10⁴. If the weight-average molecular weight is less than 10 × 10⁴, the amount of matter that melts during heating could increase, and this could preclude the use of the laminate as a food container. In addition, the influence of a decomposition product during extrusion could increase, resulting in a reduction in the lamination strength to the layer of the paper substrate (A). If the weight-average molecular weight is 35 × 10⁴ or more, the resin has an increased melt viscosity, which could lead to a reduction in the adhesion or lamination strength to the layer of the paper substrate (A).

In the present application, the weight-average molecular weight of a P3HA resin can be determined as a polystyrene-equivalent molecular weight measured by gel permeation chromatography (GPC; "Shodex GPC-101" manufactured by Showa Denko K.K.) using a polystyrene gel ("Shodex K-804" manufactured by Showa Denko K.K.) as a column and chloroform as a mobile phase.

In one embodiment of the present invention, a mixture of two or more types of P3HA resins having different weight-average molecular weights can be used in the first thermoplastic resin (B).

When a mixture of two or more types of P3HA resins is used, the weight-average molecular weight of the P3HA resins in the first thermoplastic resin (B) refers to the weight-average molecular weight of the total of the two or more types of P3HA resins contained in the first thermoplastic resin (B).

The layer of the first thermoplastic resin (B) may contain additives commonly added to resin materials, to the extent that the additives do not diminish the effect of the invention. Examples of the additives include: inorganic fillers; colorants such as pigments and dyes; odor absorbers such as activated carbon and zeolite; flavors such as vanillin and dextrin; plasticizers; oxidation inhibitors; antioxidants; weathering resistance improvers; ultraviolet absorbers; nucleating agents; lubricants; mold releases; water repellents; antimicrobials; slidability improvers; and other secondary additives. One or more of these additives may be added to the layer of the first thermoplastic resin (B). The additives are optional components, and the layer of the first thermoplastic resin (B) need not contain these components. Among the optional components, a lubricant and/or an inorganic filler is preferably used to improve the separability of the layer of the first thermoplastic resin (B) from the surface of pressure bonding means such as a cooling roll which is used to form the layer of the first thermoplastic resin (B) by lamination.

Examples of the lubricant include: aliphatic amide compounds, as exemplified by saturated or unsaturated fatty acid amides such as lauramide, myristamide, palmitamide, stearamide, behenamide, oleamide, and erucamide and alkylene fatty acid amides such as methylenebisstearamide and methylenebisstearamide; and pentaerythritol.

The amount of the lubricant in the layer of the first thermoplastic resin (B) is preferably from 0.1 to 2 parts by weight and more preferably from 0.2 to 1 parts by weight per 100 parts by weight of the first thermoplastic resin (B). When the amount of the lubricant is 0.1 parts by weight or more, the separability improving effect can be achieved by the addition of the lubricant. If the amount of the lubricant is more than 2 parts by weight, the lubricant could bleed and attach to the surface of pressure bonding means such as a cooling roll during pressure bonding, making it difficult to perform continuous processing for a long period of time.

Examples of the inorganic filler include talc, calcium carbonate, mica, silica, clay, kaolin, titanium oxide, alumina, and zeolite. The average particle size of the inorganic filler is preferably 0.5 µm or more.

The amount of the inorganic filler in the layer of the first thermoplastic resin (B) is preferably from 0.5 to 5 parts by weight and more preferably from 1 to 3 parts by weight per 100 parts by weight of the first thermoplastic resin (B). When the amount of the inorganic filler is 0.5 parts by weight or more, the separability improving effect can be achieved by the addition of the inorganic filler. If the amount of the inorganic filler is more than 5 parts by weight, the layer of the first thermoplastic resin (B) could be likely to crack.

The layer of the first thermoplastic resin (B) preferably has an average thickness (t_{B}) of 5 to less than 30 µm. When the average thickness t_{B} is 5 µm or more, the adhesion to the paper substrate (A) is further improved, and peeling of the layer of the thermoplastic resin (B) can be reliably prevented. When the average thickness t_{B} is less than 30 µm, the occurrence of cracking in the layer of the first thermoplastic resin (B) is less likely to cause the layer of the second thermoplastic resin (C) also to crack. The average thickness t_{B} is more preferably at least 10 µm and even more preferably at least 15 µm. The average thickness t_{B} may be up to 25 µm.

### [Layer of Second Thermoplastic Resin (C)]

The details of the resin component and other components forming the layer of the second thermoplastic resin (C) are the same as the details of the resin component and other components forming the layer of the first thermoplastic resin (B), except for the P3HA resin weight-average molecular weight descried below. The types and amounts of the layer-forming components may differ between the layers of the first and second thermoplastic resins (B) and (C) within the scope of the disclosure of the present application.

In terms of ensuring mechanical strength high enough for bending and heat sealability high enough for a process such as cup molding, the weight-average molecular weight of a P3HA resin in the second thermoplastic resin (C) is preferably from 45 × 10⁴ to less than 70 × 10⁴, more preferably from 50 × 10⁴ to less than 65 × 10⁴, and even more preferably from 55 × 10⁴ to less than 60 × 10⁴. If the weight-average molecular weight is less than 45 × 10⁴, the resin layer could crack during bending, and this cracking could cause leakage of water or an oil contained in a substance put into a cup-shaped molded article. If the weight-average molecular weight is 70 × 10⁴ or more, the resin has an extremely high melt viscosity, which makes melt extrusion difficult and in addiction could lead to low heat sealability in cup molding.

In one embodiment of the present invention, a mixture of two or more types of P3HA resins having different weight-average molecular weights can be used in the second thermoplastic resin (C).

When a mixture of two or more types of P3HA resins is used, the weight-average molecular weight of the P3HAresins in the second thermoplastic resin (C) refers to the weight-average molecular weight of the total of the two or more types of P3HA resins contained in the second thermoplastic resin (C).

The layer of the second thermoplastic resin (C) preferably has an average thickness (tc) of 10 µm or more. When the average thickness tc is 10 µm or more, the occurrence of cracking in the resin layer can be reduced during a process such as bending in cup molding.

The average thickness tc is more preferably 20 µm or more, even more preferably 30 µm or more, and particularly preferably 40 µm or more. The average thickness tc may be up to 90 µm or up to 80 µm.

The sum (t_{B} + tc) of the average thickness (t_{B}) of the layer of the first thermoplastic resin (B) and the average thickness (tc) of the layer of the second thermoplastic resin (C) is preferably less than 100 µm. When the sum t_{B} + tc is less than 100 µm, the paper substrate (A) is less likely to warp, and moldability in production of a molded article such as a cup can be improved.

The average thickness tc divided by the average thickness t_{B} (t_{C}/t_{B}) is preferably 2 or more. When the value t_{C}/t_{B} is 2 or more, the occurrence of cracking in the layer of the first thermoplastic resin (B) during a process such as bending in cup molding is less likely to cause the layer of the second thermoplastic resin (C) also to crack, and the overall mechanical strength of the resin layers can be further enhanced. The value t_{C}/t_{B} is more preferably 2.2 or more. The value t_{C}/t_{B} may be up to 4.

The average thickness of the layer of the first thermoplastic resin (B) and the average thickness of the layer of the second thermoplastic resin (C) more preferably meet all of the following requirements (a) to (d):
(a) the average thickness (t_{B}) of the layer of the first thermoplastic resin (B) is 5 µm or more;
(b) the average thickness (t_{C}) of the layer of the second thermoplastic resin (C) is 10 µm or more;
(c) the sum of the average thicknesses t_{B} and tc is less than 100 µm; and
(d) the average thickness tc divided by the average thickness t_{B} is 2 or more.

### [Layer of Adhesive Resin (D)]

The adhesive resin (D) is not limited to a particular type and may be any adhesive resin commonly used in the filed of coated paper or resin films. Desirably, the adhesive resin (D) contains at least one resin having high affinity for paper substrates and P3HA resins. Examples of such a resin include, but are not limited to, ester resins, acrylic resins, methacrylic resins, vinyl chloride resins, styrene-acrylic resins, styrene-butadiene resins, styrene-isoprene resins, polycarbonate resins, urea resins, melamine resins, epoxy resins, phenol resins, urethane resins, diallyl phthalate resins, and imine resins. One of these resins may be used alone or, if necessary, two or more of these resins may be mixed and used in any suitable proportions.

The adhesive resin (D) may be soluble in water or soluble in an organic solvent.

In terms of the balance between the heat sealability in cup molding and the drying properties in laminate production, the weight per unit area of the layer of the adhesive resin (D) is preferably from 0.1 to less than 5.0 g/m², more preferably from 0.3 to less than 3.0 g/m², and even more preferably from 0.5 to less than 1.0 g/m². When the weight per unit area is 0.1 g/m² or more, sufficient improving effect on the heat sealability in cup molding can be achieved. When the weight per unit area is less than 5.0 g/m², the amount of heat required for drying and therefore the load on the production equipment are reduced. Thus, for example, blocking due to insufficient drying can be avoided during winding of the laminate into a web roll.

### [Method for Producing Laminate]

A production method according to the first aspect of the present embodiment is not limited to using a particular technique and may be any method by which the layer of the first thermoplastic resin (B) containing a P3HA resin as a main component and the layer of the second thermoplastic resin (C) containing a P3HA resin as a main component are placed in this order on one side of the layer of the paper substrate (A).

In terms of adhesion, productivity, and thermal degradation resistance, the layers of the first and second thermoplastic resins (B) and (C) are preferably formed by extrusion lamination, coextrusion lamination, or thermal lamination.

Specific examples include: extrusion lamination or coextrusion lamination in which a molten resin material containing the first thermoplastic resin (B) and/or the second thermoplastic resin (C) is extruded into a film from a T-die and then the extruded film is cooled and pressure-bonded onto the paper substrate (A) separately fed, or a separately fed laminate including the layer of the paper substrate (A), by means of a cooling roll; and thermal lamination in which a film containing the first thermoplastic resin (B) or the second thermoplastic resin (C) is prepared first and the prepared film is heated and pressure-bonded onto the paper substrate (A) or a laminate including the layer of the paper substrate (A). The pressure-bonding surface may be any surface by which the resin material containing the first thermoplastic resin (B) and/or the second thermoplastic resin (C) can be pressure-bonded to the paper substrate (A) or a laminate including the layer of the paper substrate (A), and examples of the pressure-bonding surface include a planar surface or the surface of a roll.

In terms of enhancing the lamination strength between the layer of the paper substrate (A) and the layer of the first thermoplastic resin (B) or between the layers of the first and second thermoplastic resins (B) and (C), at least one of the layers of the first and second thermoplastic resins (B) and (C) is preferably formed by extrusion lamination. In terms of further enhancing the lamination strength between the layers of the first and second thermoplastic resins (B) and (C), it is preferable that the layers of the first and second thermoplastic resins (B) and (C) be simultaneously formed on the layer of the paper substrate (A) by coextrusion lamination. Performing melt extrusion and bonding in separate steps makes it easy to produce a biodegradable laminate having a desired composition. From this viewpoint, at least one of the layers of the first and second thermoplastic resins (B) and (C) is preferably formed by thermal lamination. To improve the adhesion between the paper substrate (A) on which the layer of the first thermoplastic resin (B) has been formed and the layer of the second thermoplastic resin (C), the surface of the extrusion lamination layer or thermal lamination layer may be subjected to a treatment such as corona treatment.

In terms of improving the heat sealability in cup molding, a production method according to the second aspect of the present embodiment preferably further includes the step of forming the layer of the adhesive resin (D) on that side of the layer of the paper substrate (A) which is opposite to the side having the layers of the first and second thermoplastic resins (B) and (C). In this case, the layers of the first and second thermoplastic resins (B) and (C) may be formed on one side of the layer of the paper substrate (A), and then the layer of the adhesive resin (D) may be formed on the other side of the layer of the paper substrate (A). Alternatively, the layer of the adhesive resin (D) may be first formed on one side of the layer of the paper substrate (A), and subsequently the layers of the first and second thermoplastic resins (B) and (C) may be formed on the other side of the layer of the paper substrate (A).

The layer of the adhesive resin (D) can be formed by a known coating method in which an aqueous dispersion or organic solvent solution of the adhesive resin (D) is applied to and dried on the surface of the layer of the paper substrate (A). When the adhesive resin (D) is insoluble in water, another additive may be added to improve the dispersibility in water and the coating quality. When the layer of the paper substrate (A) is coated with an aqueous dispersion of the adhesive resin (D), the solids concentration of the adhesive resin (D) is not limited to a particular range but is preferably 30 wt% or more, more preferably 40 wt% or more, and even more preferably 50 wt% or more in order to reduce the amount of heat required for drying. The solids concentration of the adhesive resin (D) is preferably 60 wt% or less since sedimentation of the dispersed resin could adversely affect the coating quality.

The application of the aqueous dispersion or organic solvent solution of the adhesive resin (D) to the paper substrate (A) is not limited to using a particular method and may be performed using any method by which a desired coating layer can be formed substantially on the paper substrate (A). Examples include known methods such as a spray method, a spreading method, a slit coater method, an air knife coater method, a roll coater method, a bar coater method, a comma coater method, a blade coater method, a screen printing method, and a gravure printing method, and these methods may be used alone or in combination. Before the application of the solution or the aqueous dispersion, the paper substrate (A) may be subjected to a surface treatment such as corona treatment as mentioned above.

The heating for drying can be performed using a known heating technique. Examples of the heating technique include hot air heating, infrared heating, microwave heating, roll heating, and hot plate heating. One of these techniques may be used alone, or two or more thereof may be used in combination.

### [Molded Article]

A molded article according to one embodiment of the present invention (hereinafter also referred to as "the present molded article") includes a biodegradable laminate of the present invention (hereinafter also referred to as "the present laminate"). The present molded article is advantageous for various uses since it includes a laminate having a P3HA resin-containing lamination layer with a good surface condition.

The present molded article is not limited to a particular product and may be any product including the present laminate. Examples of the present molded article include paper, a film, a sheet, a tube, a plate, a rod, a container (e.g., a bottle), a bag, and a part. In terms of addressing marine pollution, the present molded article is preferably a bag or a bottle.

In one embodiment of the present invention, the present molded article may be the present laminate itself or may be one produced by secondary processing using the present laminate.

The present molded article including the present laminate subjected to secondary processing is suitable for use as any of various kinds of packaging materials or containers such as shopping bags, various other kinds of bags, packaging materials for foods or confectionery products, cups, trays, and cartons. That is, the present molded article is suitable for use in various fields such as food industry, cosmetic industry, electronic industry, medical industry, and pharmaceutical industry. Since the present laminate contains a resin composition having high adhesion to the substrate and having satisfactory heat resistance, the present molded article is more preferred for use as a container for a hot substance. Examples of such a container include: liquid containers such as, in particular, cups for foods or beverages such as instant noodles, instant soups, and coffee; and trays used for prepared foods, boxed lunches, or microwavable foods.

The various kinds of secondary processing can be performed using a method identical to that used for secondary processing of conventional resin-laminated paper or coated paper. That is, the secondary processing can be performed by means such as a bag-making machine or form-fill-seal machine. Alternatively, the present laminate may be processed using a device such as a paper cup molding machine, a punching machine, or a case former. In any of these processing machines, any known technique can be used for bonding of the present biodegradable laminate. Examples of the technique that can be used include heat sealing, impulse sealing, ultrasonic sealing, high-frequency sealing, hot air sealing, and flame sealing.

The heat sealing temperature at which the present laminate is heat-sealed depends on the bonding technique used. For example, in the case where the present laminate is heat-sealed using a heat sealing tester equipped with a sealing bar, the heat sealing temperature is set so that the resin temperature is typically 180°C or lower, preferably 170°C or lower, and more preferably 160°C or lower. When the resin temperature is in this range, melting and leakage of the resin in the vicinity of the sealed portion can be avoided to ensure a suitable thickness of the resin layer and a suitable seal strength. In the case of using a heat sealing tester equipped with a sealing bar, the resin temperature is typically at least 100°C, preferably at least 110°C, and more preferably at least 120°C. When the resin temperature is in this range, suitable bonding can be ensured at the sealed portion.

The heat sealing pressure at which the present laminate is heat-sealed depends on the bonding technique used. For example, in the case where the present laminate is heat-sealed using a heat sealing tester equipped with a sealing bar, the heat sealing pressure is typically 0.1 MPa or more and preferably 0.5 MPa or more. When the heat sealing pressure is in this range, suitable bonding can be ensured at the sealed portion. In the case of using a heat sealing tester equipped with a sealing bar, the heat sealing pressure is typically up to 1.0 MPa and preferably up to 0.75 MPa. When the heat sealing pressure is in this range, thinning of the sealed edge can be avoided to ensure a suitable seal strength.

The present molded article may, for the purpose of physical property improvement, be combined with another molded article (such as a fiber, a yarn, a rope, a woven fabric, a knit, a non-woven fabric, paper, a film, a sheet, a tube, a plate, a rod, a container, a bag, a part, or a foam) made of a different material than the present molded article. The material of the other molded article is also preferably biodegradable.

In the following items, preferred aspects of the present disclosure are listed. The present invention is not limited to the following items.

### [Item 1]

A biodegradable laminate including in order:
a layer of a paper substrate (A);
a layer of a first thermoplastic resin (B) containing a poly(3-hydroxyalkanoate) resin as a main component; and
a layer of a second thermoplastic resin (C) containing a poly(3-hydroxyalkanoate) resin as a main component, wherein
the poly(3-hydroxyalkanoate) resin in the first thermoplastic resin (B) has a weight-average molecular weight of 10 × 10⁴ to less than 35 × 10⁴, and
the poly(3-hydroxyalkanoate) resin in the second thermoplastic resin (C) has a weight-average molecular weight of 45 × 10⁴ to less than 70 × 10⁴.

### [Item 2]

The biodegradable laminate according to item 1, further including a layer of an adhesive resin (D) on a side of the layer of the paper substrate (A), the side of the layer of the paper substrate (A) being opposite to a side having the layers of the first and second thermoplastic resins (B) and (C), wherein
the layer of the adhesive resin (D) has a weight per unit area of 0.1 to less than 5.0 g/m2.

### [Item 3]

The biodegradable laminate according to item 1 or 2, wherein the biodegradable laminate meets all of the following requirements (a) to (d):
(a) the layer of the first thermoplastic resin (B) has an average thickness (t_{B}) of 5 µm or more;
(b) the layer of the second thermoplastic resin (C) has an average thickness (tc) of 10 µm or more;
(c) a sum of the average thickness t_{B} and the average thickness tc is less than 100 µm; and
(d) the average thickness tc divided by the average thickness t_{B} is 2 or more.

### [Item 4]

The biodegradable laminate according to item 2 or 3, wherein the adhesive resin (D) contains at least one resin selected from the group consisting of an ester resin, an acrylic resin, a methacrylic resin, a vinyl chloride resin, a styrene-acrylic resin, a styrene-butadiene resin, a styrene-isoprene resin, a polycarbonate resin, a urea resin, a melamine resin, an epoxy resin, a phenol resin, a urethane resin, a diallyl phthalate resin, and an imine resin.

### [Item 5]

A method for producing the biodegradable laminate according to any one of items 1 to 4, the method including the step of forming at least one of the layers of the first and second thermoplastic resins (B) and (C) by extrusion lamination.

### [Item 6]

A method for producing the biodegradable laminate according to any one of items 1 to 4, the method including the step of forming the layers of the first and second thermoplastic resins (B) and (C) simultaneously on the layer of the paper substrate (A) by coextrusion lamination.

### [Item 7]

A method for producing the biodegradable laminate according to any one of items 1 to 4, the method including the step of forming at least one of the layers of the first and second thermoplastic resins (B) and (C) by thermal lamination.

### [Item 8]

A method for producing the biodegradable laminate according to item 2 or 4, the method including the step of forming the layer of the adhesive resin (D) by coating the layer of the paper substrate (A) with an aqueous dispersion or organic solvent solution of the adhesive resin (D).

### [Item 9]

A molded article including the biodegradable laminate according to any one of items 1 to 4.

### Examples

Hereinafter, the present invention will be specifically described based on examples. The technical scope of the present invention is not limited by the examples given below.

### [Production Examples]

### (Method for Preparing Coating Liquid)

Coating liquid 1: An aqueous dispersion with a P3HB3HH solids concentration of 50 wt% was obtained according to a method described in WO 2004/041936. At this point, the weight-average molecular weight of the P3HB3HH was 62 × 10⁴. Subsequently, the aqueous dispersion was held at 60°C to cause hydrolysis, which resulted in a coating liquid containing P3HB3HH having a weight-average molecular weight of 23 × 10⁴.

Coating liquid 2: An aqueous emulsion (aqueous dispersion) of an acrylic resin having an average particle size of 50 nm and a solids concentration of 30 wt% ("Gemlac^{™}" manufactured by Kaneka Corporation) was prepared.

### (Method for Producing Resin Powder Containing P3HB3HH as Main Component)

P3HB3HH powders used in Examples and Comparative Examples were all produced according to a method described in WO 2019-142845. The details of the powders are shown below.

P3HB3HH powder 1: P3HB3HH powder which has a weight-average molecular weight of 40 × 10⁴ and in which the proportion of 3HH to the total of 3HB and 3HH in P3HB3HH is 15 mol%

P3HB3HH powder 2: P3HB3HH powder which has a weight-average molecular weight of 65 × 10⁴ and in which the proportion of 3HH to the total of 3HB and 3HH in P3HB3HH is 15 mol%

P3HB3HH powder 3: P3HB3HH powder which has a weight-average molecular weight of 10 × 10⁴ and in which the proportion of 3HH to the total of 3HB and 3HH in P3HB3HH is 15 mol%

P3HB3HH powder 4: P3HB3HH powder which has a weight-average molecular weight of 80 × 10⁴ and in which the proportion of 3HH to the total of 3HB and 3HH in P3HB3HH is 15 mol%

### (Method for Producing Resin Pellets Containing P3HB3HH as Main Component)

P3HB3HH pellets 1: The P3HB3HH powder 1 (100 parts by weight) was dryblended with behenamide (0.5 parts by weight) and pentaerythritol (1.0 parts by weight). The blend was melted, kneaded, and extruded into a strand by a twin-screw extruder at a set temperature of 150°C and a screw rotational speed of 100 rpm. The strand was solidified by passing it through 40°C hot water, and the solidified strand was cut into pellets. The weight-average molecular weight was 34 × 10⁴.

P3HB3HH pellets 2: The P3HB3HH powder 2 (100 parts by weight) was dryblended with behenamide (0.5 parts by weight) and pentaerythritol (1.0 parts by weight). The blend was melted, kneaded, and extruded into a strand by a twin-screw extruder at a set temperature of 150°C and a screw rotational speed of 100 rpm. The strand was solidified by passing it through 40°C hot water, and the solidified strand was cut into pellets. The weight-average molecular weight was 62 × 10⁴.

P3HB3HH pellets 3: The P3HB3HH powder 3 (100 parts by weight) was dryblended with behenamide (0.5 parts by weight) and pentaerythritol (1.0 parts by weight). The blend was melted, kneaded, and extruded into a strand by a twin-screw extruder at a set temperature of 150°C and a screw rotational speed of 100 rpm. The strand was solidified by passing it through 40°C hot water, and the solidified strand was cut into pellets. The weight-average molecular weight was 5 × 10⁴.

P3HB3HH pellets 4: The P3HB3HH powder 4 (100 parts by weight) was dryblended with behenamide (0.5 parts by weight) and pentaerythritol (1.0 parts by weight). The blend was melted, kneaded, and extruded into a strand by a twin-screw extruder at a set temperature of 150°C and a screw rotational speed of 100 rpm. The strand was solidified by passing it through 40°C hot water, and the solidified strand was cut into pellets. The weight-average molecular weight was 75 × 10⁴.

### <Production of Laminate by Extrusion Lamination>

### (Example 1)

The P3HB3HH pellets 1 were subjected to extrusion lamination using a single-screw extruder equipped with a T-die; specifically, a melt of the pellets was extruded as a 20-µm-thick layer onto the surface of a paper substrate (A) having a weight per unit area of 200 g/m² under controlled conditions where the resin temperature as measured immediately below the die was 175°C. Thus, a laminate (S) having a layer of a first thermoplastic resin (B) on the paper substrate (A) was obtained. Subsequently, the P3HB3HH pellets 2 were subjected to extrusion lamination using a single-screw extruder equipped with a T-die; specifically, a melt of the pellets was extruded as a 45-µm-thick layer onto the surface of the first thermoplastic resin (B) layer of the laminate (S) under controlled conditions where the resin temperature as measured immediately below the die was 175°C. In this way, a biodegradable laminate having the layer of the first thermoplastic resin (B) and a layer of a second thermoplastic resin (C) on the paper substrate (A) was obtained. The composition of the obtained biodegradable laminate is shown in Table 1.

### (Example 2)

One side of the biodegradable laminate obtained in Example 1 was coated with the coating liquid 1 by means of a bar coater in such a way that the dry coating weight would be 3 g/m². The coated side was opposite to the side having the layers of the first and second thermoplastic resins (B) and (C). The coated laminate was thoroughly dried by a hot air oven to form a layer of an adhesive resin (D) and thus obtain a biodegradable laminate. The composition of the obtained biodegradable laminate is shown in Table 1.

The weight per unit area of the layer of the adhesive resin (D) was measured beforehand by the method described below.

### [Method for Measuring Weight per Unit Area of Layer of Adhesive Resin (D)]

First, the paper substrate (A) was cut into a 10-cm-sqaure piece, from which water was thoroughly evaporated by a method according to Japanese Industrial Standard (JIS) P 8127:2010 (Paper and board-Determination of moisture content of a lot-Oven-drying method). The dried piece was weighed to determine the weight of the paper substrate (A). Subsequently, an aqueous coating liquid containing the adhesive resin (D) was applied onto the paper substrate (A), and then water was thoroughly evaporated from the aqueous coating liquid by the method mentioned above. The weight of the dried product was measured, and the weight and weight per unit area (unit: g/cm²) of the applied adhesive resin (D) were determined from the difference between the weight of the dried product and the weight of the paper substrate (A).

### (Example 3)

A biodegradable laminate was obtained in the same manner as in Example 2, except that the coating liquid 2 was used instead of the coating liquid 1. The composition of the obtained biodegradable laminate is shown in Table 1.

### (Example 4)

A biodegradable laminate was obtained in the same manner as in Example 1, except that the thickness of the layer of the second thermoplastic resin (C) was adjusted to 70 µm. The composition of the obtained biodegradable laminate is shown in Table 1.

### (Example 5)

A biodegradable laminate was obtained in the same manner as in Example 1, except that the thickness of the layer of the first thermoplastic resin (B) was adjusted to 10 µm and the thickness of the layer of the second thermoplastic resin (C) was adjusted to 20 µm. The composition of the obtained biodegradable laminate is shown in Table 1.

### (Example 6)

A biodegradable laminate was obtained in the same manner as in Example 1, except that the thickness of the layer of the second thermoplastic resin (C) was adjusted to 20 µm. The composition of the obtained biodegradable laminate is shown in Table 1.

### (Example 7)

A biodegradable laminate was obtained in the same manner as in Example 1, except that the layers of the first and second thermoplastic resins (B) and (C) were simultaneously formed using a coextrusion lamination machine. The composition of the obtained biodegradable laminate is shown in Table 1.

### (Example 8)

A laminate (S) was obtained by forming a layer of a first thermoplastic resin (B) on paper having a weight per unit area of 200 g/m² in the same manner as in Example 1. After that, a P3HB3HH film produced using the P3HB3HH pellets 2 and having a thickness of 45 µm was bonded to the first thermoplastic resin (B) layer of the laminate (S) by means of a thermal laminator under conditions where the resin surface temperature was 160°C and the pressure was 0.1 MPa. Thus, a biodegradable laminate was obtained. The composition of the obtained biodegradable laminate is shown in Table 1.

### (Comparative Example 1)

A biodegradable laminate was obtained in the same manner as in Example 1, except that the P3HB3HH pellets 1 were used to form the layer of the second thermoplastic resin (C). The composition of the obtained biodegradable laminate is shown in Table 1.

### (Comparative Example 2)

A biodegradable laminate was obtained in the same manner as in Example 1, except that the P3HB3HH pellets 2 were used to form the layer of the first thermoplastic resin (B). The composition of the obtained biodegradable laminate is shown in Table 1.

### (Comparative Example 3)

A biodegradable laminate was obtained in the same manner as in Example 1, except that the P3HB3HH pellets 2 were used to form the layer of the first thermoplastic resin (B) and the P3HB3HH pellets 1 were used to form the layer of the second thermoplastic resin (C).

### (Comparative Example 4)

A biodegradable laminate was obtained in the same manner as in Example 1, except that the P3HB3HH pellets 3 were used instead of the P3HB3HH pellets 1. The composition of the obtained biodegradable laminate is shown in Table 1.

### (Comparative Example 5)

A biodegradable laminate was obtained in the same manner as in Example 1, except that the P3HB3HH pellets 4 were used instead of the P3HB3HH pellets 2. The composition of the obtained biodegradable laminate is shown in Table 1.

### [Evaluation Methods]

The biodegradable laminates obtained in Examples and Comparative Examples were evaluated for lamination strength, heat seal strength, and bending resistance. The results are shown in Table 2. The evaluations were performed by the methods described below.

### (Evaluation of Lamination Strength)

The adhesion (peel strength) between the paper substrate (A) and the resin layer formed by lamination was evaluated as a measure of lamination strength.

The lamination strength test was conducted one or more days after the biodegradable laminate production. Specifically, the thermoplastic resin surface formed by extrusion lamination was cut with a cutter blade to make a shallow crosscut pattern, then a tape, Nichiban

No. CT-17, was securely attached to the cut region, and the lamination layer was peeled in part to define the origin of delamination. After that, the sample was cut into a 15-mm-wide piece, and the cut piece was subjected to a peel strength test in which the cut piece was held by a jig in such a position that the lamination layer separated and the paper would form an angle of 180°. The tensile speed was 200 mm/min. The peel tester used was Shimadzu Autograph EZ-LX (manufactured by Shimadzu Corporation).

### <Ratings>

Good: 3.0 N/15 mm or more
Average: From 2.5 to less than 3.0 N/15 mm
Poor: Less than 2.0 N/15 mm
The rating "Good" or "Average" means that the lamination strength is sufficient.

### (Evaluation of Heat Sealability)

The heat sealing test was conducted one or more days after the biodegradable laminate production. The side having the thermoplastic resin layers and the other side (the bare side of the paper substrate (A) or the layer of the adhesive resin (D)) were brought into contact and thermally pressure-bonded using a heat sealer (TP-701-B manufactured by Tester Sangyo Co., Ltd.) at 0.4 MPa for 5 seconds. The maximum temperature reached by the resin surface during the bonding was 141°C.

The laminate was cut into a 15-mm-wide piece, which was subjected to a peel strength test according to JIS Z 0238. The chuck-to-chuck distance was 100 mm and the tensile speed was 300 mm/min. The peel tester used was Shimadzu Autograph EZ-LX (manufactured by Shimadzu Corporation).

### <Ratings>

Excellent: 3.0 N/15 mm or more
Good: From 2.3 to less than 3.0 N/15 mm
Average From 1.5 to less than 2.3 N/15 mm
Poor: Less than 1.5 N/15 mm

The rating "Excellent", "Good", or "Average" means that the heat sealability is sufficient to obtain a molded article with good quality.

### (Evaluation of Bending Resistance)

The evaluation of bending resistance was conducted one or more days after the biodegradable laminate production. Specifically, the biodegradable laminate was bent at an angle of 90° in such a way that the layer of the second thermoplastic resin (C) faced outward, and the bent portion was observed with a scanning electron microscope at a magnification of 500 times to confirm whether streak-shaped cracks occurred on the resin surface. In addition, red food coloring water with an adjusted solids concentration of 10% was applied to the bent portion and left for 1 minute. After that, the food coloring water was wiped off with a cloth, and the bent portion was inspected to confirm whether the bent portion was colored red.

### <Rating Criteria>

Excellent: The resin surface is free of streak-shaped cracks, and the bent portion is not colored with red food coloring water.

Good: The resin surface has a few streak-shaped cracks, but the bent portion is not colored with red food coloring water.

Average: The resin surface has distinct streak-shaped cracks, but the bent portion is not colored with red food coloring water.

Poor: The resin surface has streak-shaped cracks, and the bent portion is colored with red food coloring water.

The rating "Excellent", "Good", or "Average" means that the bending resistance is satisfactory.

**[Table 1]**

| | Layer of first thermoplastic resin (B) | | | Layer of second thermoplastic resin (C) | | | Thermoplastic resin layer | | Layer of adhesive resin (D) | |
|---|---|---|---|---|---|---|---|---|---|---|
| | Mw | Thickness (tb) µm | Layer formation method | Mw | Thickness (tc) µm | Layer formation method | tb + tc | tc/tb | Type | Weight per unit area (g/m²) |
| Ex. 1 | 34 × 10⁴ | 20 | Extrusion lamination | 62 × 10⁴ | 45 | Extrusion lamination | 65 | 2.25 | - | - |
| Ex. 2 | 34 × 10⁴ | 20 | Extrusion lamination | 62 × 10⁴ | 45 | Extrusion lamination | 65 | 2.25 | P3HB3HH | 3 |
| Ex. 3 | 34 × 10⁴ | 20 | Extrusion lamination | 62 × 10⁴ | 45 | Extrusion lamination | 65 | 2.25 | Acryl/St | 3 |
| Ex. 4 | 34 × 10⁴ | 20 | Extrusion lamination | 62 × 10⁴ | 70 | Extrusion lamination | 90 | 3.5 | - | - |
| Ex. 5 | 34 × 10⁴ | 10 | Extrusion lamination | 62 × 10⁴ | 20 | Extrusion lamination | 30 | 2 | - | - |
| Ex. 6 | 34 × 10⁴ | 20 | Extrusion lamination | 62 × 10⁴ | 20 | Extrusion lamination | 40 | 1 | - | - |
| Ex. 7 | 34 × 10⁴ | 20 | Coextrusion lamination | 62 × 10⁴ | 45 | Coextrusion lamination | 65 | 2.25 | - | - |
| Ex. 8 | 34 × 10⁴ | 20 | Extrusion lamination | 62 × 10⁴ | 45 | Thermal lamination | 65 | 2.25 | - | - |
| Comp. 1 | 34 × 10⁴ | 20 | Extrusion lamination | 34 × 10⁴ | 45 | Extrusion lamination | 65 | 2.25 | - | - |
| Comp. 2 | 62 × 10⁴ | 20 | Extrusion lamination | 62 × 10⁴ | 45 | Extrusion lamination | 65 | 2.25 | - | - |
| Comp. 3 | 62 × 10⁴ | 20 | Extrusion lamination | 34 × 10⁴ | 45 | Extrusion lamination | 65 | 2.25 | - | - |
| Comp. 4 | 5 × 10⁴ | 20 | Extrusion lamination | 62 × 10⁴ | 45 | Extrusion lamination | 65 | 2.25 | - | - |
| Comp. 5 | 34 × 10⁴ | 20 | Extrusion lamination | 75 × 10⁴ | 45 | Extrusion lamination | 65 | 2.25 | - | - |

**[Table 2]**

| | Evaluation results | | | |
|---|---|---|---|---|
| | Lamination strength | Heat seal strength | | Bending resistance |
| | | (N/15 mm) | Rating | |
| Ex. 1 | Good | 2.3 | Good | Good |
| Ex. 2 | Good | 3.5 | Excellent | Good |
| Ex. 3 | Good | 4.1 | Excellent | Good |
| Ex. 4 | Good | 2.7 | Good | Excellent |
| Ex. 5 | Average | 2.1 | Average | Good |
| Ex. 6 | Good | 2.1 | Average | Average |
| Ex. 7 | Good | 2.4 | Good | Good |
| Ex. 8 | Good | 2.3 | Good | Good |
| Comp. 1 | Good | 3.4 | Excellent | Poor |
| Comp. 2 | Poor | 2.3 | Good | Good |
| Comp. 3 | Poor | 3.6 | Excellent | Poor |
| Comp. 4 | Poor | 2.4 | Good | Good |
| Comp. 5 | Good | 1.2 | Poor | Excellent |

### <Results>

Tables 1 and 2 reveal that in each of Examples, a biodegradable laminate was obtained which had sufficient lamination strength between the layer of the paper substrate (A) and the layer of the first thermoplastic resin (B) and which had mechanical strength high enough for bending and heat sealability high enough for cup molding.

In Comparative Examples, sufficient lamination strength between the layer of the paper substrate (A) and the layer of the first thermoplastic resin (B), mechanical strength high enough for bending, and heat sealability high enough for cup molding were not achieved at the same time.

Thus, it has been demonstrated that the present invention can provide: a biodegradable laminate having sufficient adhesive strength between the layer of the paper substrate (A) and the layer of the first thermoplastic resin (B) and having mechanical strength high enough for bending and heat sealability high enough for a process such as cup molding; and a method for producing the biodegradable laminate.

### Reference Signs List

1. biodegradable laminate
2. layer of paper substrate (A)
3. layer of first thermoplastic resin (B)
4. layer of second thermoplastic resin (C)
5. layer of adhesive resin (D)

## Claims

1. A biodegradable laminate comprising in order:
a layer of a paper substrate (A);
a layer of a first thermoplastic resin (B) comprising a poly(3-hydroxyalkanoate) resin as a main component; and
a layer of a second thermoplastic resin (C) comprising a poly(3-hydroxyalkanoate) resin as a main component, wherein
the poly(3-hydroxyalkanoate) resin in the first thermoplastic resin (B) has a weight-average molecular weight of 10 × 10⁴ to less than 35 × 10⁴, and
the poly(3-hydroxyalkanoate) resin in the second thermoplastic resin (C) has a weight-average molecular weight of 45 × 10⁴ to less than 70 × 10⁴.

2. The biodegradable laminate according to claim 1, further comprising a layer of an adhesive resin (D) on a side of the layer of the paper substrate (A), the side of the layer of the paper substrate (A) being opposite to a side having the layers of the first and second thermoplastic resins (B) and (C), wherein
the layer of the adhesive resin (D) has a weight per unit area of 0.1 to less than 5.0 g/m².

3. The biodegradable laminate according to claim 1 or 2, wherein the biodegradable laminate meets all of the following requirements (a) to (d):
(a) the layer of the first thermoplastic resin (B) has an average thickness (t_{B}) of 5 µm or more;
(b) the layer of the second thermoplastic resin (C) has an average thickness (tc) of 10 µm or more;
(c) a sum of the average thickness t_{B} and the average thickness tc is less than 100 µm; and
(d) the average thickness tc divided by the average thickness t_{B} is 2 or more.

4. The biodegradable laminate according to claim 2, wherein the adhesive resin (D) comprises at least one resin selected from the group consisting of an ester resin, an acrylic resin, a methacrylic resin, a vinyl chloride resin, a styrene-acrylic resin, a styrene-butadiene resin, a styrene-isoprene resin, a polycarbonate resin, a urea resin, a melamine resin, an epoxy resin, a phenol resin, a urethane resin, a diallyl phthalate resin, and an imine resin.

5. A method for producing the biodegradable laminate according to claim 1 or 2, the method comprising the step of forming at least one of the layers of the first and second thermoplastic resins (B) and (C) by extrusion lamination.

6. A method for producing the biodegradable laminate according to claim 1 or 2, the method comprising the step of forming the layers of the first and second thermoplastic resins (B) and (C) simultaneously on the layer of the paper substrate (A) by coextrusion lamination.

7. A method for producing the biodegradable laminate according to claim 1 or 2, the method comprising the step of forming at least one of the layers of the first and second thermoplastic resins (B) and (C) by thermal lamination.

8. A method for producing the biodegradable laminate according to claim 2, the method comprising the step of forming the layer of the adhesive resin (D) by coating the layer of the paper substrate (A) with an aqueous dispersion or organic solvent solution of the adhesive resin (D).

9. A molded article comprising the biodegradable laminate according to claim 1 or 2.
